# EUROPÄISCHE PATENTANMELDUNG

(11) **EP 3 838 992 A1**
(43) Veröffentlichungstag der Anmeldung: **23.06.2021**
(21) Anmeldenummer: 19218933.0
(22) Anmeldetag: 20.12.2019
(51) Int. Cl.: C09D 5/02, C09D 7/65, C09D 125/00, C09D 133/04, C09D 131/04, C09J 11/02, C04B 26/00, C09J 11/00

(54) **WÄSSRIGES BESCHICHTUNGSSTOFFSYSTEM, DESSEN VERWENDUNG SOWIE INNENFARBE, FASSADENFARBE, SPACHTELMASSE, PUTZ, GRUNDIERUNG, KLEBEMASSE, LACK, LASUR ODER PIGMENTPASTE, ENTHALTEND DAS WÄSSRIGE BESCHICHTUNGSSTOFFSYSTEM**

(71) Anmelder: DAW SE, 64372 Ober-Ramstadt (DE)
(72) Erfinder: BRENNER, Thomas, 64367 Mühltal (DE); WESTMEIER, Johannes, 64572 Büttelborn (DE); EIGENBRODT, Dirk, 64397 Modautal (DE); GROßKOPF, Jan, 64367 Mühltal (DE)
(74) Vertreter: Metten, Karl-Heinz

(57) **Zusammenfassung**

Die vorliegende Erfindung betrifft ein wässriges Beschichtungsstoffsystem, enthaltend einen pH-Puffer, enthaltend eine Polyacrylsäure, ein Salze von Polyacrylsäuren oder Copolymere gebildet mit Comonomeren enthaltend Carboxylgruppen und/oder Carboxylatgruppen, jeweils mit einem gewichtsmittleren Molekulargewicht Mw von mindestens 500 g/mol, ein organisches Bindemittel und ein pH-Einstellmittel mit einem pKs kleiner 7,0, wobei das wässrige Beschichtungsstoffsystem einen pH-Wert kleiner oder gleich 7,0 aufweist. Ferner betrifft die Erfindung die Verwendung des wässrigen Beschichtungsstoffsystems für die Herstellung von oder als Farbe, Spachtelmasse, Putz, Grundierung, Klebemasse, Lack, Lasur oder Pigmentpaste sowie die Verwendung eines pH-Puffers, enthaltend eine Polyacrylsäure, ein Salze von Polyacrylsäuren, Copolymere gebildet mit Comonomeren enthaltend Carboxylgruppen und/oder Carboxylatgruppen, jeweils mit einem gewichtsmittleren Molekulargewicht Mw von mindestens 500 g/mol, und eines pH-Einstellmittels für die pH-Stabilisierung wässriger Beschichtungsstoffsysteme, enthaltend ein organisches Bindemittel, mit einem pH-Wert kleiner oder gleich 7,0. Schließlich betrifft die Erfindung eine Farbe, Putz, Spachtelmasse, Grundierung, Lack, Lasur oder Pigmentpaste, enthaltend das wässrige Beschichtungsstoffsystem.

## Beschreibung

Die vorliegende Erfindung betrifft ein wässriges Beschichtungsstoffsystem. Außerdem betrifft die Erfindung die Verwendung dieses erfindungsgemäßen wässrigen Beschichtungsstoffsystems für die Herstellung von oder als Innenfarbe, Fassadenfarbe, Spachtelmasse, Putz, Grundierung, Klebemasse, Lack, Lasur oder Pigmentpaste oder als Bestandteil hiervon. Auch betrifft die Erfindung eine Innenfarbe, Fassadenfarbe, Spachtelmasse, Putz, Grundierung, Klebemasse, Lack, Lasur oder Pigmentpaste, enthaltend das erfindungsgemäße wässrige Beschichtungsstoffsystem. Darüber hinaus betrifft die Erfindung die Verwendung eines pH-Puffers und mindestens eines pH-Einstellmittels für die pH-Stabilisierung der erfindungsgemäßen wässrigen Beschichtungsstoffsysteme.

Wässrige Beschichtungsstoffe haben regelmäßig für eine bestimmte Zeitdauer lagerstabil zu sein. Dieses Erfordernis gilt gleichermaßen für Innenfarben, Fassadenfarben, Spachtelmasse, Putze, Grundierungen, Klebemassen, Lacke, Lasuren oder Pigmentpasten. Denn sowohl während der Herstellung wie auch weder während des Transports, noch während der Anbietens zum Verkauf oder der Lagerung bis zur Nutzung darf eine Beeinträchtigung durch zum Beispiel mikrobiellen Befall stattfinden. Aus diesem Grund werden noch stets viele Beschichtungsstoffe mit Konservierungsmitteln, beispielsweise auch bekannt als Topf- und Filmkonservierungsmittel, versetzt. Als Konservierungsmittel für die Topfkonservierung von wässrigen Beschichtungsstoffen finden unter anderem Isothiazolinonderivate, Formaldehyd und formaldehydabspaltende Speicherformen sowie Pyrithion-Verbindungen Anwendung. Nicht alle der verfügbaren Konservierungsmittel sind jedoch für wässrige Beschichtungsstoffe uneingeschränkt geeignet, beispielsweise aufgrund von pH-Empfindlichkeiten, und verfügen über eine geringe Wirksamkeit und/oder eine geringe Stabilität. Auch sind Konservierungsmittel für Beschichtungsstoffe oder dergleichen zuweilen nur gegen ein limitiertes Keimspektrum wirksam und/oder weisen pH-Abhängigkeiten der Wirksamkeit oder Stabilität auf. Vielen Konservierungsmitteln für wässrige Beschichtungsmassen haftet der Nachteil an, für Allergiker nicht geeignet zu sein. Aus diesem Grunde hat es nicht an Versuchen gefehlt, auf derartige herkömmliche Konservierungsmittel komplett verzichten zu können. Hierbei ist man auf wässrige Beschichtungsstoffe gestoßen, die aufgrund ihrer hohen pH-Werte ausreichend lagerstabil sind.

So betrifft die DE 10 2016 002 221 A1 eine Dispersionsfarbe mit einem pH-Wert im Bereich von 10 bis 12, enthaltend, jeweils bezogen auf das Gesamtgewicht der Dispersionsfarbe, 1 bis 15 Gew.-% Pigment, 30 bis 60 Gew.-% Füllstoff, 1 bis 25 Gew.-% Polymer, 0,1 bis 3,5 Gew.-% Alkalimetallalkylsilikonat und 25 bis 70 Gew.-% Wasser. Diese Dispersionsfarbe soll im Wesentlichen frei von herkömmlichen Konservierungsmitteln sein, eine gute Lagerfähigkeit aufweisen und/oder gut verarbeitbar sein.

In der WO 02/00798 wird eine Dispersionsfarbe beschrieben, enthaltend 4-15 Gew.-% Polymerdispersion, gerechnet als Feststoffanteil, 10-55 Gew.-% Pigment und/oder Füllstoff sowie maximal 2 Gew.-% Wasserglas als Additiv und zu 100 Gew.-% ergänzte Anteile an Wasser. Auch diese Dispersionsfarbe, die regelmäßig auf einen pH-Wert im Bereich von 8,5 bis 12 eingestellt zu sein hat, soll ohne Konservierungsstoffe auskommen, eine befriedigende Lagerstabilität aufweisen und gleichzeitig die von den Dispersionsfarben bekannten guten und sicheren Verarbeitungseigenschaften besitzen.

Die DE 10 2014 013 455 A1 offenbart eine Dispersionsfarbe für Innen und Außen, enthaltend 2-30% Polymerdispersion, gerechnet als Feststoffanteil, 10-60% Pigment und/oder Füllstoff, 0,5-5% Siliconat als Additiv und zu 100% ergänzte Anteile an Wasser. Der pH-Wert der Dispersionsfarbe kann mittels Siliconat und/oder wasserlöslicher Hydroxide auf einen Wert im Bereich von 8 bis 12 eingestellt sein. Derartige Dispersionsfarben sollen frei an Topfkonservierungsmitteln sein und über verbesserte Verarbeitungseigenschaften verfügen.

Das Arbeiten mit wässrigen Beschichtungsstoffen, die wie die vorangehend geschilderten Systeme mit einem hohen pH-Wert ausgestattet sind, kann mitunter zu Hautreizungen sowie trockener und rissiger Haut führen, beispielsweise bedingt durch eine Schädigung des Säureschutzmantels der Haut.

Der vorliegenden Erfindung lag daher die Aufgabe zugrunde, einen wässrigen Beschichtungsstoff zur Verfügung zu stellen, der nicht mehr mit den Nachteilen des Stands der Technik behaftet ist und der insbesondere bei der Anbringung bzw. Handhabung nicht mehr zu Hautreizungen führt bzw. die Gefahr von Hautreizungen verringert. Der vorliegenden Erfindung lag darüber hinaus die Aufgabe zugrunde, solche wässrigen Beschichtungsstoffe zur Verfügung zu stellen, die zusätzlich auch für Allergiker geeignet sind, über eine hinreichende Lagerstabilität verfügen und/oder, insbesondere und, gute Verarbeitungseigenschaften besitzen.

Demgemäß wurde ein wässriges Beschichtungsstoffsystem gefunden, enthaltend
a) mindestens einen pH-Puffer, ausgewählt aus der Gruppe bestehend aus oder enthaltend mindestens eine Polyacrylsäure, mindestens ein Salze von Polyacrylsäuren, Copolymere gebildet mit Comonomeren enthaltend Carboxylgruppen, Copolymere gebildet mit Comonomeren enthaltend Carboxylatgruppen oder beliebige Mischungen dieser Verbindungen, wobei diese Polyacrylsäuren, Salze von Polyacrylsäuren, Copolymere gebildet mit Comonomeren enthaltend Carboxylgruppen und Copolymere gebildet mit Comonomeren enthaltend Carboxylatgruppen ein gewichtsmittleres Molekulargewicht Mw von mindestens 500 g/mol aufweisen,
b) mindestens ein organisches Bindemittel und
c) mindestens ein pH-Einstellmittel mit einem pKs kleiner 7,0 sowie
d) gegebenenfalls mindestens ein Pigment und/oder mindestens einen Füllstoff und/oder
e) gegebenenfalls mindestens ein Additiv und/oder
f) gegebenenfalls mindestens ein Konservierungsmittel,
wobei das wässrige Beschichtungsstoffsystem einen pH-Wert, bestimmt mit einer pH-Elektrode gemäß DIN 55659-1:2012-01 bei 23 ± 2 °C, kleiner oder gleich 7,0, bevorzugt kleiner oder gleich 6,5 und besonders bevorzugt kleiner oder gleich 6,0 und ganz besonders bevorzugt im Bereich von 4,5 bis 6,0 aufweist oder auf einen pH-Wert kleiner oder gleich 7,0, bevorzugt kleiner oder gleich 6,5 und besonders bevorzugt kleiner oder gleich 6,0 und ganz besonders bevorzugt im Bereich von 4,5 bis 6,0 eingestellt ist.

Die Messung des pH-Wertes des erfindungsgemäßen wässrigen Beschichtungsstoffsystems kann auf der Basis der DIN 55659-1:2012-01 (Beschichtungsstoffe - Bestimmung des pH-Wertes) vorgenommen werden. Hierfür können die erfindungsgemäßen wässrigen Beschichtungsstoffsysteme unverdünnt mit einer pH-Elektrode bei einer Temperatur von 23 ± 2 °C vermessen werden. Ein geeignetes pH-Meter kann u.a. von der Firma Mettler Toledo, Deutschland, bezogen werden, z.B. das Gerät SevenEasy, wobei als pH-Messelektrode das Produkt InLab ExpertPro der Firma Mettler Toledo verwendet werden kann (Best.-Nr. 51343101).

Unter den genannten Salzen der Polyacrylsäuren und der Copolymeren gebildet mit Comonomeren enthaltend Carboxyl- bzw. Carboxylatgruppen sind Ammoniumsalze, Alkalisalze und Erdalkalisalze besonders bevorzugt.

Der pH-Puffer wird in der Regel in Form eines wässrigen Systems, enthaltend mindestens eine der genannten pH-Puffersubstanzen, eingesetzt. Für viele Anwendungen hat es sich als besonders vorteilhaft erwiesen, auf solche wässrigen pH-Puffersysteme zurückzugreifen, die über eine Puffereigenschaft im pH-Wertbereich von 4,0 bis 6,5 und besonders bevorzugt im Bereich von 4,5 bis 6,0 verfügen. Dies umfasst insbesondere Puffersysteme, bei denen die konjugierte Säure des als pH-Puffer eingesetzten Stoffes oder Stoffgemisches im wässrigen Medium (bei 20 °C) einen pKs-Wert im Bereich von 4,0 bis 6,5, besonders bevorzugt im Bereich von 4,5 bis 6,0, aufweist.

Der pKs-Wert kann z.B. potentiometrisch bei 20 °C bestimmt werden nach Subirats, Xavier & Fuguet, Elisabet & Rosés, Martí & Bosch, Elisabeth & Ràfols, Clara. (2015). Methods for pKa Determination (I): Potentiometry, Spectrophotometry, and Capillary Electrophoresis. 10.1016/B978-0-12-409547-2.11559-8.

Besonders vorteilhaft wird dabei auf Polyacrylsäuren, Salze von Polyacrylsäuren, Copolymere gebildet mit Comonomeren enthaltend Carboxylgruppen und Copolymere gebildet mit Comonomeren enthaltend Carboxylatgruppen zurückgegriffen, die über ein gewichtsmittleres Molekulargewicht Mw von mindestens 5.000 g/mol verfügen. Alternativ oder zusätzlich kann auch auf vernetzte Polyacrylsäuren, Salze von vernetzten Polyacrylsäuren bzw. vernetzte Copolymere gemäß Komponente a) zurückgegriffen werden, insbesondere mit einem gewichtsmittleren Molekulargewicht Mw von mindestens 800 g/mol, vorzugsweise von mindestens 8,000 g/mol. Das gewichtsmittlere Molekulargewicht Mw kann dabei mittels Gelpermeationschromatographie, z.B. unter Verwendung einer Hochdruckflüssigkeitschromatographie-Pumpe und eines Brechungsindexdetektors bestimmt werden. Zwecks Kalibrierung kann auf Polystyrol-Standards zurückgegriffen werden.

Für die erfindungsgemäßen wässrigen Beschichtungsstoffsysteme geeignete Additive können ausgewählt werden aus der Gruppe bestehend aus Entschäumern, Netzmitteln, Dispergiermitteln, Rheologie-modifizierenden Verbindungen, insbesondere Verdickern, beispielsweise auf Basis von Celluloseethern und/oder Celluloseether-Derivaten, Stabilisatoren, Hydrophobierungsmittel und deren beliebigen Mischungen.

Für die Einstellung des pH-Wertes der erfindungsgemäßen wässrigen Beschichtungsstoffsysteme kommt ein pH-Einstellmittel zum Einsatz. Dies wird vorzugsweise ausgewählt aus der Gruppe bestehend aus Säuren mit einem pKs-Wert, ermittelt wie vorangehend spezifiziert, kleiner oder gleich 3,0 und bevorzugt kleiner oder gleich 2,0. Das pH-Einstellmittel kann beispielsweise eine Mineralsäure, insbesondere Salzsäure, eine anorganische Säure, insbesondere Phosphorsäure oder eine Schwefel-oxo-Säure bzw. ein Salz einer Schwefel-oxo-Säure, oder eine organische Säure wie Zitronensäure, Benzoesäure und/oder Sorbinsäure, sein, bevorzugt jedoch eine Mineralsäure, insbesondere Salzsäure, eine anorganische Säure, insbesondere Phosphorsäure oder eine Schwefel-oxo-Säure bzw. ein Salz einer Schwefel-oxo-Säure. Auch können Mischungen dieser Säuren eingesetzt werden. Solche Säuren sind als pH-Einstellmittel bevorzugt, die als Reinstoff bei Raumtemperatur (20 °C) in festem Aggregatzustand vorliegen. Für die erfindungsgemäßen wässrigen Beschichtungsstoffsysteme wird als pH-Einstellmittel bevorzugt auf Schwefel-oxo-Säuren bzw. den Salzen von Schwefel-oxo-Säuren, besonders bevorzugt auf Alkalihydrogensulfate, beispielsweise Kaliumhydrogensulfat, und/oder die Hydrate der Alkalihydrogensulfate, beispielsweise des Kaliumhydrogensulfats, zurückgegriffen.

Das erfindungsgemäße wässrige Beschichtungsstoffsystem ist vorzugsweise im Wesentlichen frei von herkömmlichen synthetischen Konservierungsmittel wie insbesondere Isothiazolinon-Konservierungsmitteln bzw. solchen auf Basis von Isothiazolinon und/oder, insbesondere und, Formaldehyd und formaldehydabspaltenden Verbindungen und/oder, insbesondere und Pyrithion-Verbindungen. Alternativ oder insbesondere zusätzlich ist das erfindungsgemäße wässrige Beschichtungsstoffsystem im Wesentlichen frei von Konservierungsmitteln, die als CMR-Stoffe deklariert sind.

Für die erfindungsgemäßen wässrigen Beschichtungsstoffsysteme haben sich solche Konservierungsmittel als besonders geeignet herausgestellt, insbesondere ohne deren Verarbeitungseigenschaften negativ zu beeinflussen, die auch für Lebensmittel geeignet sind. Demgemäß können derartige Konservierungsmittel insbesondere ausgewählt werden aus der Gruppe bestehend aus wasserlöslichen Salzen der Sorbinsäure, bevorzugt Alkalisorbat, besonders bevorzugt Kaliumsorbat, wasserlöslichen Salzen der Benzoesäure, bevorzugt Alkalibenzoat, besonders bevorzugt Natriumbenzoat, wasserlöslichen Salzen der para-Hydroxybenzoesäure, bevorzugt Alkali-para-Hydroxybenzoat, besonders bevorzugt Natrium-para-Hydroxybenzoat, und beliebigen Mischungen dieser Verbindungen.

Das erfindungsgemäße wässrige Beschichtungsstoffsystem ist darüber hinaus mit mindestens einem organischen Bindemittel ausgestattet. Das organische Bindemittel basiert vorzugsweise auf einer wässrigen, insbesondere nicht plastifizierten, filmbildenden Polymerdispersion. Diese wird zweckmäßigerweise gebildet unter Verwendung eines vinylaromatischen Comonomers, insbesondere Styrol, und mindestens eines (Meth)acrylsäureester-Comonomers, insbesondere Acrylsäureester, oder unter Verwendung der Comonomeren Ethylen und Vinylacetat oder unter Verwendung von (Meth)acrylat-Comonomeren. Bevorzugt wird auf Vinylacetat/Ethylen-Copolymere zurückgegriffen.

Enthält das erfindungsgemäße wässrige Beschichtungsstoffsystem Pigmente, sind diese bevorzugt ausgewählt aus der Gruppe bestehend aus Titandioxid, Eisenoxid, Chromoxid, Kobaltblau, Phtalocyaninpigmenten, Spinellpigmenten, Nickeltitanat, Chromtitanat und deren beliebige Mischungen. Zusätzlich oder alternativ kann das erfindungsgemäße wässrige Beschichtungsstoffsystem auch Füllstoff aufweisen. Geeignete Füllstoffe können ausgewählt werden aus der Gruppe bestehend aus silikatischen Füllstoffen, insbesondere Glimmer, Flußspat, Sulfaten und Oxiden und deren beliebigen Mischungen, wobei solche ausgewählt aus der Gruppe bestehend aus silikatischen Füllstoffen, insbesondere Glimmer, Flußspat, Sulfaten und Oxiden und deren beliebigen Mischungen bevorzugt sind. Auch in solchen Ausführungsvarianten, in denen das erfindungsgemäße wässrige Beschichtungsstoffsystem Füllstoffe enthält, liegen in diesem Beschichtungsstoffsystem in besonders zweckmäßigen Ausführungsformen im Wesentlichen keine Alkali- und/oder Erdalkalicarbonate, bevorzugt keine Alkali- und Erdalkalicarbonate und besonders bevorzugt keine calcitischen Füllstoffe vor.

Die erfindungsgemäßen wässrigen Beschichtungsstoffsysteme enthalten in einer bevorzugten Ausführungsform 20 bis 70 Gew.-%, bevorzugt 30 bis 60 Gew.-%, Wasser, 0,5 bis 20 Gew.-%, bevorzugt 2 bis 15 Gew.-%, besonders bevorzugt 4 bis 12 Gew.-%, organisches Bindemittel (Feststoffanteil), 0,1 bis 4 Gew.-%, bevorzugt 0,2 bis 3 Gew.-% und besonders bevorzugt 0,3 bis 2 Gew.-%, Verdicker (Feststoffanteil), 0,1 bis 4 Gew.-%, bevorzugt 0,2 bis 2,5 Gew.-% und besonders bevorzugt 0,4 bis 1,5 Gew.-%, Netzmittel (Feststoffanteil), 20 bis 65 Gew.-%, bevorzugt 30 bis 55 Gew.-% Pigmente und/oder Füllstoffe, 0,01 bis 5 Gew.-%, bevorzugt 0,05 bis 2 Gew.-% und besonders bevorzugt 0,1 bis 1 Gew.-%, pH-Einstellmittel, 0,1 bis 5 Gew.-%, bevorzugt 0,2 bis 4 Gew.-% und besonders bevorzugt 0,5 bis 3 Gew.-%, pH-Puffer und 0 bis 5 Gew.-%, bevorzugt 0,1 bis 4 Gew.-% weitere Additive (Feststoffanteil), wobei die das wässrige Beschichtungsstoffsystem bildenden Komponenten sich stets zu 100,0 Gew.-% ergänzen.

In einer besonders zweckmäßigen Ausführungsform kann das wässrige Beschichtungsstoffsystem 0,40 Gewichtsprozent Verdicker, insbesondere Celluloseether-Verdicker, 1,0 Gewichtsprozent Netzmittel, 0,5 Gewichtsprozent Entschäumer, 14,0 Gewichtsprozent Pigment, insbesondere Titandioxid, 30 Gewichtsprozent Füllstoffe, insbesondere Kaolin und/oder Silikate, z.B. Schichtsilikate, 13 Gewichtsprozent organisches Bindemittel, insbesondere Vinylacetat/Ethylen-Copolymere, 0,21 Gewichtsprozent pH-Einstellmittel, z.B. 0,7 Gew.-% Salzsäure (32-prozentig), 2,0 Gewichtsprozent pH-Puffer, insbesondere Polyacrylsäure und/oder Salze der Polyacrylsäure und Wasser enthalten, wobei die das wässrige Beschichtungsstoffsystem bildenden Komponenten sich stets zu 100,0 Gew.-% ergänzen. Der pH-Wert eines auf der Basis der vorangehend spezifizierten Zusammensetzung hergestellten erfindungsgemäßen Beschichtungsstoffsystems verhielt sich über die Zeit wie folgt: Nach einem Tag wurde ein pH-Wert von 5,48, nach 28 Tagen ein pH-Wert von 5,48 und nach 163 Tagen ein pH-Wert von 5,43 ermittelt.

Das erfindungsgemäße wässrige Beschichtungsstoffsystem kann vielfältig angewendet werden, beispielsweise als Innenfarbe, Fassadenfarbe, Spachtelmasse, Putz, Grundierung, Klebemasse, Lack, Lasur oder Pigmentpaste oder als Bestandteil hiervon. Demgemäß kann es auch für die Herstellung der vorangehend genannten Beschichtungsmassen eingesetzt werden. Folglich wird die der Erfindung zugrunde liegende Aufgabe auch gelöst durch eine Innenfarbe, Fassadenfarbe, Spachtelmasse, Putz, Grundierung, Klebemasse, Lack, Lasur oder Pigmentpaste, enthaltend oder gebildet aus dem wässrigen erfindungsgemäßen Beschichtungsstoffsystem.

Die der Erfindung zugrunde liegende Aufgabe wid des Weiteren gelöst durch die Verwendung eines pH-Puffers, ausgewählt aus der Gruppe bestehend aus oder enthaltend mindestens eine Polyacrylsäure, mindestens ein Salze von Polyacrylsäuren, Copolymere gebildet mit Comonomeren enthaltend Carboxylgruppen, Copolymere gebildet mit Comonomeren enthaltend Carboxylatgruppen oder beliebige Mischungen dieser Verbindungen, wobei diese Polyacrylsäuren, Salze von Polyacrylsäuren, Copolymere gebildet mit Comonomeren enthaltend Carboxylgruppen und Copolymere gebildet mit Comonomeren enthaltend Carboxylatgruppen ein gewichtsmittleres Molekulargewicht Mw von mindestens 500 g/mol aufweisen, und mindestens eines pH-Einstellmittels für die pH-Stabilisierung wässriger Beschichtungsstoffsysteme, insbesondere erfindungsgemäßer wässriger Beschichtungsstoffsysteme, enthaltend mindestens ein organisches Bindemittel, die über einen pH-Wert, bestimmt mit einer pH-Elektrode gemäß DIN 55659-1:2012-01 bei 23 ± 2 °C, kleiner oder gleich 7,0, bevorzugt kleiner oder gleich 6,5 und besonders bevorzugt kleiner oder gleich 6,0 und ganz besonders bevorzugt im Bereich von 4,5 bis 6,0 verfügen.

Mit der vorliegenden Erfindung geht die überraschende Erkenntnis einher, lagerstabile wässrige Beschichtungsstoffe und/oder Beschichtungsstoffsysteme mit hautverträglichen pH-Wert durch gleichzeitige Verwendung eines pH-Puffers und eines pH-Einstellmittels erhalten zu können, die sich durch eine sehr ausgeprägte pH-Stabilität auszeichnen. Als ein weiterer Vorteil der erfindungsgemäßen wässrigen Beschichtungsstoffsysteme hat sich überraschend gezeigt, dass diese mit lebensmitteltauglichen Konservierungsmitteln ausgestattet werden können, um einen hinreichenden Schutz gegen mikrobiellen Befall sicherstellen zu können. Auch bei längerem und häufigem Kontakt mit der Haut verursachen die erfindungsgemäßen wässrigen Beschichtungsstoffsysteme regelmäßig keine Hautreizungen. Von besonderem Vorteil ist auch, dass sie von Allergikern genutzt werden können. Sie bieten damit einen größtmöglichen Schutz sowohl für diejenigen Personen, die mit den erfindungsgemäßen wässrigen Beschichtungsstoffsystemen Beschichtungen, beispielsweise Wand- oder Deckenbeschichtungen, herstellen, als auch für Personen, die sich in Räumen aufhalten, deren Wände oder Decken mit diesen Beschichtungsstoffsystemen beschichtet worden sind. Von besonderem Vorteil ist auch, dass das erfindungsgemäße Beschichtungsstoffsystem in Form von Farben zu Beschichtungen mit einer hinreichenden Nassabriebbeständigkeit führt. Demgemäß ist eine Widerstandsfähigkeit gegenüber mechanischer Beanspruchung auch bei Feuchte gegeben, was sich positiv auf die Lebensdauer der Beschichtung auswirkt.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässriges Beschichtungsstoffsystem, enthaltend
a) mindestens einen pH-Puffer, enthaltend mindestens eine Polyacrylsäure, mindestens ein Salze von Polyacrylsäuren, Copolymere gebildet mit Comonomeren enthaltend Carboxylgruppen, Copolymere gebildet mit Comonomeren enthaltend Carboxylatgruppen oder beliebige Mischungen dieser Verbindungen, wobei diese Polyacrylsäuren, Salze von Polyacrylsäuren, Copolymere gebildet mit Comonomeren enthaltend Carboxylgruppen und Copolymere gebildet mit Comonomeren enthaltend Carboxylatgruppen ein gewichtsmittleres Molekulargewicht Mw von mindestens 500 g/mol aufweisen,
b) mindestens ein organisches Bindemittel und
c) mindestens ein pH-Einstellmittel mit einem pKs kleiner 7,0 sowie
d) gegebenenfalls mindestens ein Pigment und/oder mindestens einen Füllstoff und/oder
e) gegebenenfalls mindestens ein Additiv und/oder
f) gegebenenfalls mindestens ein Konservierungsmittel,
wobei das wässrige Beschichtungsstoffsystem einen pH-Wert, bestimmt mit einer pH-Elektrode gemäß DIN 55659-1:2012-01 bei 23 ± 2 °C, kleiner oder gleich 7,0, bevorzugt kleiner oder gleich 6,5 und besonders bevorzugt kleiner oder gleich 6,0 und ganz besonders bevorzugt im Bereich von 4,5 bis 6,0 aufweist oder auf einen pH-Wert kleiner oder gleich 7,0, bevorzugt kleiner oder gleich 6,5 und besonders bevorzugt kleiner oder gleich 6,o und ganz besonders bevorzugt im Bereich von 4,5 bis 6,0 eingestellt ist

2. Wässriges Beschichtungsstoffsystem nach Anspruch 1, **dadurch gekennzeichnet, dass**
die Salze ausgewählt sind aus Ammoniumsalzen, Alkalisalzen und Erdalkalisalzen.

3. Wässriges Beschichtungsstoffsystem nach Anspruch 1 oder 2, **dadurch gekennzeichnet, dass**
die Polyacrylsäuren, die Salze von Polyacrylsäuren und/oder die Copolymeren gemäß Komponente a) vernetzte Polyacrylsäuren, Salze von vernetzten Polyacrylsäuren bzw. vernetzte Copolymere gemäß Komponente a) darstellen oder umfassen, insbesondere mit einem gewichtsmittleren Molekulargewicht Mw von mindestens 800 g/mol.

4. Wässriges Beschichtungsstoffsystem nach einem der vorangehenden Ansprüche,
**dadurch gekennzeichnet, dass**
die Additive ausgewählt sind aus der Gruppe bestehend aus Entschäumern, Netzmitteln, Dispergiermitteln, Rheologie-modifizierenden Verbindungen, insbesondere Verdickern, insbesondere auf Basis von Celluloseethern und/oder Celluloseether-Derivaten, Stabilisatoren, Hydrophobierungsmittel und deren beliebigen Mischungen.

5. Wässriges Beschichtungsstoffsystem nach einem der vorangehenden Ansprüche,
**dadurch gekennzeichnet, dass**
das pH-Einstellmittel einen pKs-Wert kleiner oder gleich 3,0 und bevorzugt kleiner oder gleich 2,0 aufweist, und insbesondere Alkalihydrogensulfate und/oder die Hydrate von Alkalihydrogensulfaten umfasst.

6. Wässriges Beschichtungsstoffsystem nach einem der vorangehenden Ansprüche,
**dadurch gekennzeichnet, dass**
das pH-Einstellmittel eine Mineralsäure, insbesondere Salzsäure, eine anorganische Säure, insbesondere Phosphorsäure oder eine Schwefel-oxo-säure, oder eine organische Säure oder Salze einer Schwefel-oxo-Säure umfasst, und/oder dass das pH-Einstellmittel Säuren, insbesondere anorganische Säuren, umfasst, die als Reinstoff bei Raumtemperatur in festem Aggregatzustand vorliegen.

7. Wässriges Beschichtungsstoffsystem nach einem der vorangehenden Ansprüche,
**dadurch gekennzeichnet, dass**
das Konservierungsmittel ausgewählt ist aus der Gruppe bestehend aus wasserlöslichen Salzen der Sorbinsäure, bevorzugt Alkalisorbat, besonders bevorzugt Kaliumsorbat, wasserlöslichen Salzen der Benzoesäure, bevorzugt Alkalibenzoat, besonders bevorzugt Natriumbenzoat, wasserlöslichen Salzen der para-Hydroxybenzoesäure, bevorzugt Alkali-para-Hydroxybenzoat, besonders bevorzugt Natrium-para-Hydroxybenzoat, und beliebigen Mischungen dieser Verbindungen.

8. Wässriges Beschichtungsstoffsystem nach einem der vorangehenden Ansprüche,
**dadurch gekennzeichnet, dass**
das organische Bindemittel auf einer wässrigen, insbesondere nicht plastifizierten, filmbildenden Polymerdispersion basiert gebildet unter Verwendung mindestens eines vinylaromatischen Comonomers, insbesondere Styrol, und mindestens eines (Meth)acrylsäureester-Comonomers, insbesondere Acrylsäureester, oder unter Verwendung der Comonomeren Ethylen und Vinylacetat oder unter Verwendung von (Meth)acrylat-Comonomeren, insbesondere Acrylat-Comonomeren.

9. Wässriges Beschichtungsstoffsystem nach einem der vorangehenden Ansprüche,
**dadurch gekennzeichnet, dass**
das mindestens eine Pigment ausgewählt ist aus der Gruppe bestehend aus Titandioxid, Eisenoxid, Chromoxid, Kobaltblau, Phtalocyaninpigmenten, Spinellpigmenten, Nickeltitanat, Chromtitanat und deren beliebige Mischungen und/oder dass der mindestens eine Füllstoff ausgewählt ist aus der Gruppe bestehend aus silikatischen Füllstoffen, insbesondere Glimmer, Flußspat, Sulfaten und Oxiden und deren beliebigen Mischungen.

10. Wässriges Beschichtungsstoffsystem nach einem der vorangehenden Ansprüche,
**dadurch gekennzeichnet, dass**
dieses im Wesentlichen frei von Alkali- und Erdalkalicarbonaten, insbesondere frei von jeglichen Carbonaten, ist.

11. Wässriges Beschichtungsstoffsystem nach einem der vorangehenden Ansprüche,
**dadurch gekennzeichnet, dass**
dieses im Wesentlichen frei ist von Isothiazolinon-Konservierungsmitteln, Konservierungsmitteln auf Basis von Isothiazolinon, Formaldehyd, formaldehydabspaltenden Verbindungen und/oder Pyrithion-Verbindungen, und/oder im Wesentlichen frei von Konservierungsmitteln, die als CMR-Stoffe deklariert sind.

12. Wässriges Beschichtungsstoffsystem nach einem der vorangehenden Ansprüche,
**dadurch gekennzeichnet, dass**
das wässrige Beschichtungsstoffsystem eine Innenfarbe, eine Fassadenfarbe, einen Putz, eine Spachtelmasse, eine Grundierung, eine Klebemasse, einen Lack, eine Lasur oder eine Pigmentpaste darstellt oder Bestandteil hiervon ist.

13. Wässriges Beschichtungsstoffsystem nach einem der vorangehenden Ansprüche,
**dadurch gekennzeichnet, dass**
die konjugierte Säure des pH-Puffers a) im wässrigen Medium (bei 20 °C) einen pKs-Wert im Bereich von 4,0 bis 6,5, besonders bevorzugt im Bereich von 4,5 bis 6,0, aufweist.

14. Verwendung des wässrigen Beschichtungsstoffsystems für die Herstellung von oder als Innenfarbe, Fassadenfarbe, Spachtelmasse, Putz, Grundierung, Klebemasse, Lack, Lasur oder Pigmentpaste oder als Bestandteil hiervon.

15. Verwendung eines pH-Puffers, enthaltend mindestens eine Polyacrylsäure, mindestens ein Salze von Polyacrylsäuren, Copolymere gebildet mit Comonomeren enthaltend Carboxylgruppen, Copolymere gebildet mit Comonomeren enthaltend Carboxylatgruppen oder beliebige Mischungen dieser Verbindungen, wobei diese Polyacrylsäuren, Salze von Polyacrylsäuren, Copolymere gebildet mit Comonomeren enthaltend Carboxylgruppen und Copolymere gebildet mit Comonomeren enthaltend Carboxylatgruppen ein gewichtsmittleres Molekulargewicht Mw von mindestens 500 g/mol aufweisen, und mindestens eines pH-Einstellmittels für die pH-Stabilisierung wässriger Beschichtungsstoffsysteme, enthaltend mindestens ein organisches Bindemittel, mit einem pH-Wert, bestimmt mit einer pH-Elektrode gemäß DIN 55659-1:2012-01 bei 23 ± 2 °C, kleiner oder gleich 7,0, bevorzugt kleiner oder gleich 6,5 und besonders bevorzugt kleiner oder gleich 6,0 und ganz besonders bevorzugt im Bereich von 4,5 bis 6,0.

16. Verwendung nach Anspruch 15, **dadurch gekennzeichnet, dass**
das wässrige Beschichtungsstoffsystem eine Innenfarbe, eine Fassadenfarbe, eine Spachtelmasse, einen Putz, eine Grundierung, eine Klebemasse, einen Lack, eine Lasur oder eine Pigmentpaste darstellt oder Bestandteil hiervon ist.

17. Innenfarbe, Fassadenfarbe, Putz, Spachtelmasse, Grundierung, Klebemasse, Lack, Lasur oder Pigmentpaste, enthaltend oder gebildet aus dem wässrigen Beschichtungsstoffsystem gemäß einem der Ansprüche 1 bis 13.
